# EUROPEAN PATENT SPECIFICATION

(11) **EP 4 257 878 B1**
(45) Date of publication and mention of the grant of the patent: **19.02.2025**
(21) Application number: 21908731.9
(22) Date of filing: 30.09.2021
(51) Int. Cl.: F22B 1/02, F22B 35/00, F22B 37/42

(54) **STEAM GENERATOR SYSTEM, STEAM GENERATOR PRESSURE CONTROL SYSTEM, AND CONTROL METHOD THEREFOR**
DAMPFERZEUGERSYSTEM, DAMPFERZEUGERDRUCKSTEUERUNGSSYSTEM UND STEUERUNGSVERFAHREN DAFÜR
SYSTÈME GÉNÉRATEUR DE VAPEUR, SYSTÈME DE COMMANDE DE PRESSION DE GÉNÉRATEUR DE VAPEUR ET PROCÉDÉ DE COMMANDE CORRESPONDANT

(30) Priority: 25.12.2020 CN 202011573183
(43) Date of publication of application: 11.10.2023
(73) Proprietor: China Nuclear Power Technology Research Institute Co., Ltd., Shenzhen, Guangdong 518031 (CN); China General Nuclear Power Corporation, Shenzhen, Guangdong 518028 (CN); CGN Power Co., Ltd., Shenzen, Guangdong 518028 (CN)
(72) Inventor: ZHU, Jianmin, Shenzhen, Guangdong 518031 (CN); CHEN, Tianming, Shenzhen, Guangdong 518031 (CN); WANG, Na, Shenzhen, Guangdong 518031 (CN); HU, Yousen, Shenzhen, Guangdong 518031 (CN); ZHANG, Wei, Shenzhen, Guangdong 518031 (CN); LU, Xianghui, Shenzhen, Guangdong 518031 (CN); ZHOU, Mingjia, Shenzhen, Guangdong 518031 (CN); WANG, Kai, Shenzhen, Guangdong 518031 (CN); WANG, Xiaoting, Shenzhen, Guangdong 518031 (CN); WANG, Weiru, Shenzhen, Guangdong 518031 (CN); WEI, Danjing, Shenzhen, Guangdong 518031 (CN); LI, Bingwen, Shenzhen, Guangdong 518031 (CN); LIU, Yiran, Shenzhen, Guangdong 518031 (CN); HU, Yisong, Shenzhen, Guangdong 518031 (CN); GAO, Yaxin, Shenzhen, Guangdong 518031 (CN)
(74) Representative: Westphal, Mussgnug & Partner, Patentanwälte mbB
(86) International application number: PCT/CN2021/122297
(87) International publication number: WO 2022/134730

(56) References cited:
- EP-A1- 3 495 730
- WO-A1-2012/026328
- CN-A- 1 257 174
- CN-A- 111 780 089
- CN-A- 112 682 770
- JP-A- H10 253 007
- US-A- 4 275 447
- US-A- 4 912 732
- US-A1- 2013 161 009
- US-B2- 9 291 345

## Description

### FIELD OF THE INVENTION

The present invention relates to the technical field of nuclear power and, in particular, to a steam generator system, a steam generator pressure control system and a control method therefor.

### DESCRIPTION OF THE RELATED ART

A once-through steam generator is a key device in the reactor design, which provides sufficient water for the steam generator to transfer heat in the primary loop coolant, causing the steam generator to generate and supply saturated steam to the secondary loop powerplant. In the design of the PWR nuclear power plant, the pressure of the steam generator is controlled to be near its design value by an automatic pressure control system of the once-through steam generator, thereby ensuring the normal and stable operation of the reactor.

In the prior art, the outlet pressure of the once-through steam generator is usually controlled by using pressure deviation and steam-water flow deviation, without considering mismatching between the quick response characteristic of the once-through steam generator and the response lag of the reactor core.

The disadvantages of the prior art include high requirements for the execution mechanism of the control system and large amplitude of the valve action, which are adverse to the system stability.

Publications EP 3 495 730 A1, US 9 291 345 B2, US 2013/161009 A1 and CN 111 780 089 A are considered to be relevant to the present application.

### SUMMARY OF THE INVENTION

The technical problem to be solved by the present invention is to provide an improved steam generator system, steam generator pressure control system and steam generator pressure control method, which can meet the requirements of the outlet pressure control of the once-through steam generator and ensure the normal and stable operation of the once-through steam generator.

The technical solution adopted by the present invention to solve the technical problem is providing a once-through steam generator pressure control system comprising a once-through steam generator, a steam turbine and a water supply regulating valve group. The system further includes:
a pressure deviation control channel configured to measure an outlet pressure value of the once-through steam generator;
a first control unit configured to compare the outlet pressure value with a target pressure setting value and selectively output a pressure deviation signal;
a steam-water flow deviation control channel configured to measure an outlet flow value of the once-through steam generator and an inlet flow value of the water supply regulating valve group;
a second control unit configured to calculate a difference value between the outlet flow value and the inlet flow value, superpose the difference value and the pressure deviation signal, and output a fine adjustment control signal;
a load demand control channel configured to measure a steam inlet pressure value of the steam turbine;
a third control unit configured to compare the steam inlet pressure value with a switching threshold value and selectively output a high-low load signal;
the water supply regulating valve group includes a first valve and a second valve, the first valve is selectively opened or closed in response to the high-low load signal, and the second valve is selectively opened or closed in response to the high-low load signal.

Preferably, the high-low load signal includes coarse adjustment opening data, and a first valve opening is further set for the first valve according to the coarse adjustment opening data.

Preferably, the fine adjustment control signal includes fine adjustment opening data, and a second valve opening is further set for the second valve according to the fine adjustment opening data in the fine adjustment control signal.

Preferably, the system further includes a pressure control device, and the pressure control device includes the first control unit, the second control unit and the third control unit.

Preferably, the steam-water flow deviation control channel includes a first steam-water flow deviation control channel and a second steam-water flow deviation control channel, the first steam-water flow deviation control channel is configured to measure the outlet flow value of the once-through steam generator, and the second steam-water flow deviation control channel is configured to measure the inlet flow value of the water supply regulating valve group; the first steam-water flow deviation control channel includes a second pressure transmitter, a second analog quantity conditioning distribution board and a second analog quantity input board.

Preferably, the pressure deviation control channel includes a first pressure transmitter, a first analog quantity conditioning distribution board, and a first analog quantity input board.

Preferably, the load demand control channel includes a third pressure transmitter, a third analog quantity conditioning distribution board, and a third analog quantity input board.

A once-through steam generator pressure control method is also provided, which includes the following steps executed by the above-described once-through steam generator pressure control system:
S1, measuring an outlet pressure value of the once-through steam generator, determining whether the outlet pressure value is greater than a target pressure setting value, and if yes, outputting a pressure deviation signal;
S2, measuring an outlet flow value of the once-through steam generator and an inlet flow value of the water supply regulating valve group, calculating a difference value between the outlet flow value and the inlet flow value, superposing the difference value and the pressure deviation signal, and outputting a fine adjustment control signal;
S3, measuring a steam inlet pressure value of the steam turbine, determining whether the steam inlet pressure value exceeds a switching threshold, if yes, outputting a high-low load signal, and opening both the first valve and the second valve; and if not, closing the first valve, and opening the second valve.

Preferably, the high-low load signal further includes coarse adjustment opening data, and the method further includes the step of setting a first valve opening for the first valve according to the coarse adjustment opening data.

Preferably, the fine adjustment control signal includes fine adjustment opening data, and the method further includes the step of setting a second valve opening for the second valve according to the fine adjustment opening data in the fine adjustment control signal.

A steam generator pressure control system is also provided, which includes:
a first control module configured to measure an outlet pressure value of a steam generator, and compare the outlet pressure value with a preset target pressure value to obtain a pressure deviation value;
a second control module configured to measure an outlet flow value of the steam generator and an inlet flow value of a water supply regulating valve group, calculate a flow difference value between the outlet flow value and the inlet flow value, and then superpose the flow difference value and the pressure deviation value to obtain a first opening degree value for controlling a first valve of the water supply regulating valve group; and
a third control module configured to measure a steam inlet pressure value of a steam turbine and compare the steam inlet pressure value with a preset reference threshold to obtain a second opening degree value for controlling a second valve of the water supply regulating valve group.

Preferably, the second opening degree value of the second valve includes second opening data, and a first valve opening is further set for the first valve according to the second opening data.

Preferably, the first opening degree value of the first valve includes first opening data, and a second valve opening is further set for the second valve according to the first opening data.

Preferably, the first control module includes a first control channel and a first control unit, the first control channel is configured to measure the outlet pressure value of the steam generator, and the first control unit is configured to compare the outlet pressure value with the preset target pressure value to obtain the pressure deviation value.

Preferably, the second control module includes a second control channel and a second control unit, the second control channel is configured to measure the outlet flow value of the steam generator and the inlet flow value of the water supply regulating valve group, the second control unit is configured to calculate the flow difference value between the outlet flow value and the inlet flow value, and then superposing the flow difference value and the pressure deviation value.

Preferably, the second control channel includes a first deviation control channel and a second deviation control channel, the first deviation control channel is configured to measure the outlet flow value of the steam generator, and the second deviation control channel is configured to measure the inlet flow value of the water supply regulating valve group.

Preferably, the third control module includes a third control channel and a third control unit, the third control channel is configured to measure the steam inlet pressure value of the steam turbine, and the third control unit is configured to compare the steam inlet pressure value with the preset reference threshold to obtain the second opening degree value for controlling the second valve of the water supply regulating valve group.

A steam generator pressure control method is also provided, which includes:
S1, measuring an outlet pressure value of a steam generator, and comparing the outlet pressure value with a preset target pressure value to obtain a pressure deviation value;
S2, measuring an outlet flow value of the steam generator and an inlet flow value of the water supply regulating valve group, calculating a flow difference value between the outlet flow value and the inlet flow value, and then superposing the flow difference value and the pressure deviation value to obtain a first opening degree value for controlling a first valve of the water supply regulating valve group; and
S3, measuring a steam inlet pressure value of the steam turbine, and comparing the steam inlet pressure value with a preset reference threshold to obtain a second opening degree value for controlling a second valve of the water supply regulating valve group.

Preferably, the step S1 includes:
S11, measuring the outlet pressure value of the steam generator;
S12, comparing the outlet pressure value with the preset target pressure value to obtain a pressure deviation value.

Preferably, the step S2 includes:
S21, measuring the outlet flow value of the steam generator and the inlet flow value of the water supply regulating valve group;
S22, calculating the flow difference value between the outlet flow value and the inlet flow value, and then superposing the flow difference value and the pressure deviation value.

Preferably, the step S21 includes:
S211, measuring the outlet flow value of the steam generator;
S212, measuring the inlet flow value of the water supply regulating valve group.

Preferably, the step S3 includes:
S31, measuring the steam inlet pressure value of the steam turbine;
S32, comparing the steam inlet pressure value with the preset reference threshold to obtain the second opening degree value for controlling the second valve of the water supply regulating valve group.

A nuclear power plant steam generator system is also provided, which includes a steam generator, a steam turbine, a water supply regulating valve group, and the above-described steam generator pressure control system.

The present invention has the following benefits. In the steam generator system, the steam generator pressure control system and the steam generator pressure control method, the steam generator pressure control system controls the opening and closing conditions of the water supply regulating valve group through the first control module, the second control module and the third control module. The three control modules are used to distinguish the needs of coarse adjustment and fine adjustment so as to individually control the opening and closing conditions of the first valve and the second valve, thereby meeting the needs of both the coarse adjustment and the fine adjustment.

According to the steam generator system, the steam generator pressure control system and the steam generator control method, the once-through steam generator cannot only achieve the fine adjustment of the pressure in the small-disturbance transient process, but can also quickly and stably adjust the pressure to the target state when a large-amplitude transient change occurs.

In the normal operation transient process of the reactor, the present invention can quickly and accurately control the outlet pressure of the once-through steam generator, with the mismatching between the rapid response characteristic of the once-through steam generator and the response lag of the reactor core being also taken into account, thereby realizing coordinated control of the primary and secondary loops, such that the response of the control system and actions of the executing mechanism are made more reasonable, which is beneficial to the stable operation of the reactor system.

### BRIEF DESCRIPTION OF THE DRAWINGS

The present invention will be further described below with reference to the accompanying drawings and embodiments, in which:
Fig. 1 is a schematic diagram illustrating a principle of a once-through steam generator pressure control system according to some embodiments of the present invention;
Fig. 2 is a schematic diagram illustrating a principle of a steam flow deviation control channel according to some embodiments of the present invention;
Fig. 3 is a schematic diagram illustrating a principle of a pressure control device in Fig. 1;
Fig. 4 is a schematic diagram illustrating a principle of a water supply regulating valve group according to some embodiments of the present invention;
Fig. 5 is a flowchart of a once-through steam generator pressure control method according to some embodiments of the present invention;
Fig. 6 is a schematic diagram illustrating a principle of a nuclear power plant steam generator system according to other embodiments of the present invention;
Fig. 7 is a schematic diagram illustrating a principle of a steam generator pressure control system in Fig. 6;
Fig. 8 is a schematic diagram illustrating a principle of a first control module in Fig. 7;
Fig. 9 is a schematic diagram illustrating a principle of a second control module in Fig. 7;
Fig. 10 is a schematic diagram illustrating a principle of a third control module in Fig. 7;
Fig. 11 is a flowchart of a steam generator pressure control method according to other embodiments of the present invention.

### DETAILED DESCRIPTION OF EMBODIMENTS

In order to provide a better understanding of the technical features, objectives, and effects of the present invention, specific embodiments of the present invention are described in detail with reference to the accompanying drawings.

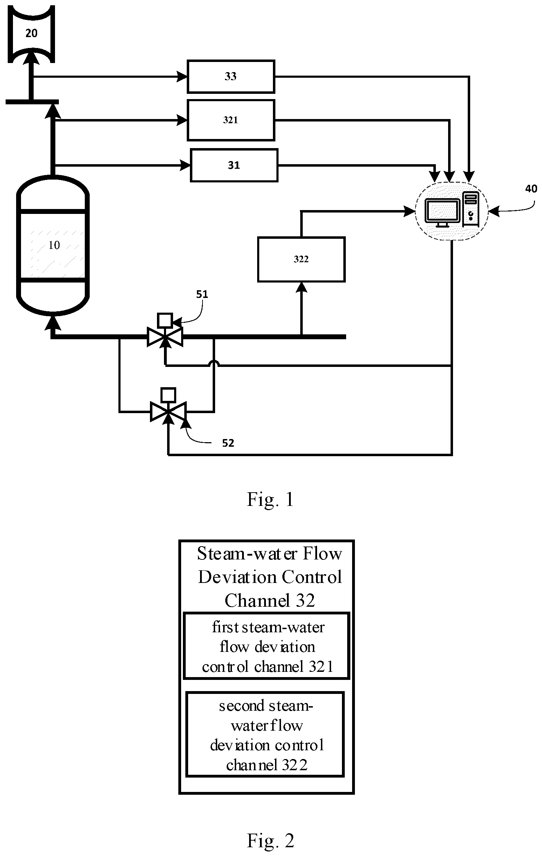

Fig. 1 shows a once-through steam generator pressure control system according to some embodiments of the present invention, for controlling a once-through steam generator 10, which can not only achieve fine adjustment of pressure in a small disturbance transient process, but can also quickly and stably adjust the pressure to a target state when a large-amplitude transient change occurs. As shown in Figs. 1-4, the once-through steam generator pressure control system according to the embodiments of the present invention incudes a once-through steam generator 10, a steam turbine 20, a water supply regulating valve group 50, a pressure deviation control channel 31, a steam-water flow deviation control channel 32, a load demand control channel 33, and a pressure control device 40. The pressure deviation control channel 31, the steam-water flow deviation control channel 32 and the load demand control channel 33 respectively measure an outlet pressure value, an outlet flow value,an inlet flow value, and a steam inlet pressure value, and the pressure control device 40 calculates and distinguishes a coarse adjustment state and a fine adjustment state according to the outlet pressure value, the outlet flow value, the inlet flow value and the steam inlet pressure value, and outputs a fine adjustment control signal and high-low load signal, so as to control opening and closing conditions of the water supply regulating valve group 50.

The pressure deviation control channel 31 is configured to measure the outlet pressure value of the once-through steam generator 10. An inlet of the pressure deviation control channel 31 is connected to an outlet of the once-through steam generator 10, and an outlet of the pressure deviation control channel 31 is connected to the pressure control device 40. In some embodiments, as an option, the pressure deviation control channel 31 may include a first pressure transmitter, a first analog quantity conditioning distribution board, and a first analog quantity input board. It can be understood that the pressure measurement, the analog quantity conditioning and input of the pressure deviation control channel 31 may also be performed in other manners, which are not specifically limited herein, as long as relevant functions can be achieved.

As shown in Fig. 1, Fig. 2 and Fig. 4, the steam-water flow deviation control channel 32 is configured to measure the outlet flow value of the once-through steam generator 10 and the inlet flow value of the water supply regulating valve group 50. In some embodiments, the steam-water flow deviation control channel 32 includes a first steam-water flow deviation control channel 321 and a second steam-water flow deviation control channel 322, the first steam-water flow deviation control channel 321 is configured to measure the outlet flow value of the once-through steam generator 10, and the second steam-water flow deviation control channel 322 is configured to measure the inlet flow value of the water supply regulating valve group 50. In some embodiments, as an option, the first steam-water flow deviation control channel 321 may include a second pressure transmitter, a second analog quantity conditioning distribution board, and a second analog quantity input board. It can be understood that the pressure measurement, the analog quantity conditioning and input of the steam-water flow deviation control channel 32 may also be performed in other manners, which are not specifically limited herein, as long as relevant functions can be achieved.

The load demand control channel 33 is configured to measure the steam inlet pressure value of the steam turbine 20. An inlet of the load demand control channel 33 is connected to an inlet of the steam turbine 20, and an outlet of the load demand control channel 33 is connected to the pressure control device 40. As an option, in some embodiments, the load demand control channel 33 may include a third pressure transmitter, a third analog quantity conditioning distribution board, and a third analog quantity input board. It can be understood that the pressure measurement, the analog quantity conditioning and input of the load demand control channel 33 may also be performed in other manners, which are not specifically limited herein, as long as relevant functions can be achieved.

As shown in Figs. 1-4, the pressure control device 40 includes a first control unit 41, a second control unit 42, and a third control unit 43. It can be understood that the first control unit 41, the second control unit 42, and the third control unit 43 may be implemented as software or circuit boards, which is not limited herein, as long as relevant functions can be achieved.

The first control unit 41 is configured to compare the outlet pressure value with a target pressure setting value and selectively output a pressure deviation signal. It can be understood that the target pressure setting value herein may be set according to specific requirements, which is not specifically limited herein, as long as relevant functions can be achieved.

The second control unit 42 calculates a difference value between the outlet flow value and the inlet flow value, superimposes the difference value and the pressure deviation signal, and outputs a fine adjustment control signal. Preferably, the fine adjustment control signal includes fine adjustment opening data.

The third control unit 43 is configured to compare the steam inlet pressure value with a switching threshold and selectively output a high-low load signal. Preferably, the high-low load signal includes coarse adjustment opening data.

The water supply regulating valve group 50 includes a first valve 51 and a second valve 52, the first valve 51 is selectively opened or closed according to the high-low load signal, and the second valve 52 is selectively opened or closed according to the high-low load signal.

In some embodiments, a first valve opening is further set for the first valve 51 according to the coarse adjustment opening data. A second valve opening is further set for the second valve 52 according to the fine adjustment opening data in the fine adjustment control signal.

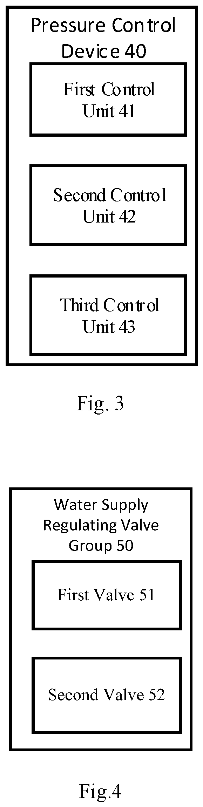

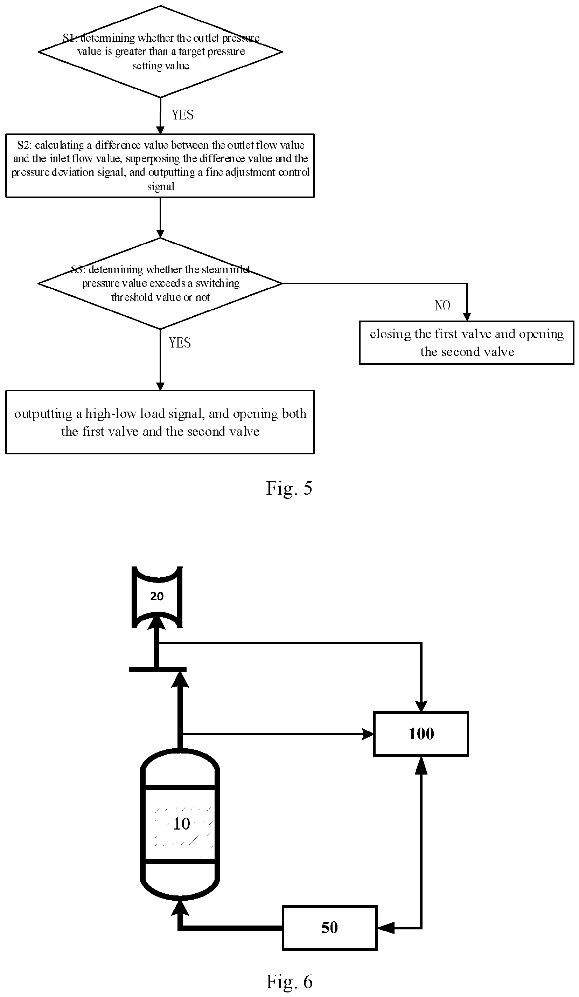

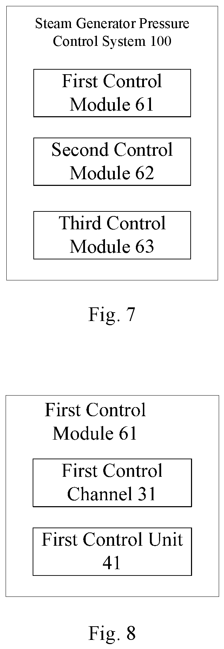

Fig. 6 illustrates a steam generator system of a nuclear power plant according to other embodiments of the present invention, which includes a steam generator 10, a steam turbine 20, a water supply regulating valve group 50, and a steam generator pressure control system 100. As shown in Figs. 4, 6 and 7, the water supply regulating valve group 50 includes a first valve 51 and a second valve 52; the steam generator pressure control system 100 includes a first control module 61, a second control module 62 and a third control module 63, the first control module 61 is configured to obtain a pressure deviation value, the second control module 62 is configured to obtain a first opening degree value for controlling the first valve 51 of the water supply regulating valve group 50, and the third control module 63 is configured to obtain a second opening degree value for controlling the second valve 52 of the water supply regulating valve group 50. The steam generator pressure control system 100 controls the opening and closing conditions of the water supply regulating valve group 50 through the first control module 61, the second control module 62 and the third control module 63, so as to control the steam generator 10, which can not only achieve the fine adjustment of the pressure in the small disturbance transient process, but can also quickly and stably adjust the pressure to the target state when a large-amplitude transient change occurs.

In some embodiments, the steam generator 10 may be a once-through steam generator, or may be a steam generator in other common forms in the nuclear power field, which is not specifically limited herein, as long as relevant functions can be achieved. The steam turbine 20 may be the same as those in the foregoing embodiment, and may also be a steam turbine 20 in other common forms in the nuclear power field, which is not specifically limited herein, as long as relevant functions can be achieved.

As shown in Figs. 1, 4 and 6, the water supply regulating valve group 50 includes a first valve 51 and a second valve 52, the first valve 51 is selectively opened or closed according to the first opening degree value, and the second valve 52 is selectively opened or closed according to the second opening degree value.

In some embodiments, the first valve 51 further sets the first valve opening according to the second opening data in the second opening degree value. The second valve 52 further sets the second valve opening according to the first opening data in the first opening degree value. Preferably, the first opening degree value of the first valve 51 includes first opening data, and the second valve 52 further sets the second valve opening according to the first opening data.

Referring to Fig. 1, Fig. 6 and Fig. 7, in some preferred embodiments of the present invention, the steam generator pressure control system 100 includes a first control module 61, a second control module 62, and a third control module 63. The first control module 61 is configured to obtain a pressure deviation value, the second control module 62 is configured to obtain a first opening degree value for controlling the first valve 51 of the water supply regulating valve group 50, and the third control module 63 is configured to obtain a second opening degree value for controlling the second valve 52 of the water supply regulating valve group 50.

Referring to Figs. 1 and 6-8, the first control module 61 is configured to measure the outlet pressure value of the steam generator 10, and compare the outlet pressure value with a preset target pressure value to obtain a pressure deviation value. Specifically, the first control module 61 includes a first control channel 31 and a first control unit 41, the first control channel 31 is configured to measure the outlet pressure value of the steam generator 10, and the first control unit 41 is configured to compare the outlet pressure value with the preset target pressure value to obtain a pressure deviation value.

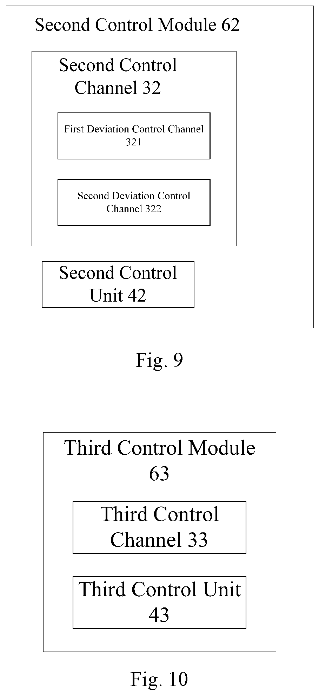

Referring to Figs. 1, 6, 7 and 9, the second control module 62 is configured to measure the outlet flow value of the steam generator 10 and the inlet flow value of the water supply regulating valve group 50, calculate a flow difference value between the outlet flow value and the inlet flow value, and superimpose the flow difference value and the pressure deviation value to obtain a first opening degree value for controlling the first valve 51 of the water supply regulating valve group 50. Preferably, the first opening degree value of the first valve 51 includes first opening data, and a second valve opening is further set for the second valve 52 according to the first opening data.

Specifically, the second control module 62 includes a second control channel 32 and a second control unit 42, the second control channel 32 is configured to measure the outlet flow value of the steam generator 10 and the inlet flow value of the water supply regulating valve group 50, the second control unit 42 is configured to calculate a flow difference value between the outlet flow value and the inlet flow value, and then superimpose the flow difference value and the pressure deviation value.

In some embodiments, the second control channel 32 includes a first deviation control channel 321 and a second deviation control channel 322, the first deviation control channel 321 is configured to measure the outlet flow value of the steam generator 10, and the second deviation control channel 322 is configured to measure the inlet flow value of the water supply regulating valve group 50.

Referring to Figs. 1, 6, 7 and 10, the third control module 63 is configured to measure the steam inlet pressure value of the steam turbine 20, and compare the steam inlet pressure value with a preset reference threshold to obtain a second opening degree value for controlling the second valve 52 of the water supply regulating valve group 50. Preferably, the second opening degree value of the second valve 52 includes second opening data, and a first valve opening is further set for the first valve 51 according to the second opening data.

Specifically, the third control module 63 includes a third control channel 33 and a third control unit 43, the third control channel 33 is configured to measure the steam inlet pressure value of the steam turbine 20, and the third control unit 43 is configured to compare the steam inlet pressure value with a preset reference threshold to obtain a second opening degree value for controlling the second valve 52 of the water supply regulating valve group 50.

Other parts of the nuclear power plant steam generator system in this embodiment are the same as the once-through steam generator pressure control system in the foregoing embodiment, explanations of which are not repeated herein.

The specific steps of the once-through steam generator pressure control method according to some embodiments of the present invention are described below with reference to Figs. 1-5. In the embodiments of the present invention, the once-through steam generator pressure control method includes the following steps S1-S3.

S1: measuring an outlet pressure value of the once-through steam generator 10, determining whether the outlet pressure value is greater than a target pressure setting value, and if yes, outputting a pressure deviation signal.

S2: measuring an outlet flow value of the once-through steam generator 10 and an inlet flow value of the water supply regulating valve group 50, calculating a difference value between the outlet flow value and the inlet flow value, superposing the difference value and the pressure deviation signal, and outputting a fine adjustment control signal.

S3: measuring a steam inlet pressure value of the steam turbine 20, determining whether the steam inlet pressure value exceeds a switching threshold value or not, if yes, outputting a high-low load signal, and opening both the first valve 51 and the second valve 52; and if not, closing the first valve 51, and opening the second valve 52.

In some embodiments, the high-low load signal further includes coarse adjustment opening data, and the method further includes the step that a first valve opening is further set for the first valve 51 according to the coarse adjustment opening data. Preferably, a second valve opening is further set for the second valve 52 according to the fine adjustment opening data in the fine adjustment control signal.

The once-through steam generator pressure control method of this embodiment is consistent with the once-through steam generator pressure control system in the foregoing embodiment, explanations of which are not repeated herein.

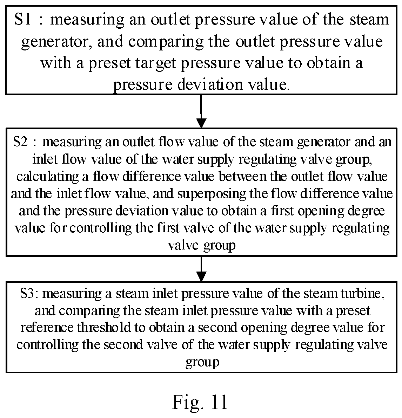

The specific steps of the steam generator pressure control method in some preferred embodiments of the present invention are described below in conjunction with Figs. 6-11. In this embodiment, the steam generator pressure control method further includes the following steps S1-S3:
S1: measuring an outlet pressure value of the steam generator 10, and comparing the outlet pressure value with a preset target pressure value to obtain a pressure deviation value. Preferably, step S1 further includes the following steps S11 and S12:
   S11: measuring an outlet pressure value of the steam generator 10;
   S12: comparing the outlet pressure value with a preset target pressure value to obtain a pressure deviation value.
S2: measuring an outlet flow value of the steam generator 10 and an inlet flow value of the water supply regulating valve group 50, calculating a flow difference value between the outlet flow value and the inlet flow value, and superposing the flow difference value and the pressure deviation value to obtain a first opening degree value for controlling the first valve 51 of the water supply regulating valve group 50.

Specifically, step S2 includes:
S21: measuring an outlet flow value of the steam generator 10 and an inlet flow value of the water supply regulating valve group 50;
S22: calculating a flow difference value between the outlet flow value and the inlet flow value, and then superposing the flow difference value and the pressure deviation value.

Preferably, step S21 further includes step S211 and step S212:
S211: measuring an outlet flow value of the steam generator 10;
S212: measuring an inlet flow value of the water supply regulating valve group 50.

S3: measuring a steam inlet pressure value of the steam turbine 20, and comparing the steam inlet pressure value with a preset reference threshold to obtain a second opening degree value for controlling the second valve 52 of the water supply regulating valve group 50.

Preferably, step S3 further includes step S31 and step S32:
S31: measuring a steam inlet pressure value of the steam turbine 20;
S32: comparing the steam inlet pressure value with a preset reference threshold to obtain a second opening degree value for controlling the second valve 52 of the water supply regulating valve group 50.

In some other embodiments, the present invention further provides a steam generator pressure control system 100 as shown in Figs. 6-7. The steam generator pressure control system 100 of this embodiment is consistent with those in the foregoing embodiment, details of which are not repeated herein. The once-through steam generator pressure control method and system enables the once-through steam generator 10 to not only achieve the fine adjustment of the pressure in the small disturbance transient process, but also quickly and stably adjust the pressure to the target state when a large-amplitude transient change occurs.

In the normal operation transient process of the reactor, the present invention can quickly and accurately control the outlet pressure of the once-through steam generator 10, with the mismatching between the rapid response characteristic of the once-through steam generator 10 and the response lag of the reactor core being also taken into account, thereby realizing coordinated control of the primary and secondary loops, such that the response of the control system and actions of the executing mechanism are made more reasonable, which is beneficial to the stable operation of the reactor system.

## Claims

1. A once-through steam generator pressure control system, comprising a once-through steam generator (10), a steam turbine (20) and a water supply regulating valve group (50); the system further comprising
a pressure deviation control channel (31) configured to measure an outlet pressure value of the once-through steam generator (10);
a first control unit (41) configured to compare the outlet pressure value with a target pressure setting value and selectively output a pressure deviation signal;
a steam-water flow deviation control channel (32) configured to measure an outlet flow value of the once-through steam generator (10) and an inlet flow value of the water supply regulating valve group (50);
a second control unit (42) configured to calculate a difference value between the outlet flow value and the inlet flow value, superpose the difference value and the pressure deviation signal, and output a fine adjustment control signal;
**characterized in that** it further comprises
a load demand control channel (33) configured to measure a steam inlet pressure value of the steam turbine (20);
a third control unit (43) configured to compare the steam inlet pressure value with a switching threshold value and selectively output a high-low load signal;
wherein the water supply regulating valve group (50) comprises a first valve (51) and a second valve (52), the first valve (51) is selectively opened or closed in response to the high-low load signal, and the second valve (52) is selectively opened or closed in response to the high-low load signal.

2. The once-through steam generator pressure control system according to claim 1, **characterized in that** the high-low load signal comprises coarse adjustment opening data, and a first valve opening is further set for the first valve (51) according to the coarse adjustment opening data.

3. The once-through steam generator pressure control system according to claim 1, **characterized in that** the fine adjustment control signal comprises fine adjustment opening data, and a second valve opening is further set for the second valve (52) according to the fine adjustment opening data in the fine adjustment control signal.

4. The once-through steam generator pressure control system according to claim 1, **characterized in that** the system further comprises a pressure control device (40), and the pressure control device (40) comprises the first control unit (41), the second control unit (42) and the third control unit (43).

5. The once-through steam generator pressure control system according to claim 1, **characterized in that** the steam-water flow deviation control channel (32) comprises a first steam-water flow deviation control channel (321) and a second steam-water flow deviation control channel (322), the first steam-water flow deviation control channel (321) is configured to measure the outlet flow value of the once-through steam generator (10), and the second steam-water flow deviation control channel (322) is configured to measure the inlet flow value of the water supply regulating valve group (50); the first steam-water flow deviation control channel (321) comprises a second pressure transmitter, a second analog quantity conditioning distribution board and a second analog quantity input board.

6. The once-through steam generator pressure control system according to any one of claims 1-5, **characterized in that** the pressure deviation control channel (31) comprises a first pressure transmitter, a first analog quantity conditioning distribution board, and a first analog quantity input board.

7. The once-through steam generator pressure control system according to any one of claims 1-5, **characterized in that** the load demand control channel (33) comprises a third pressure transmitter, a third analog quantity conditioning distribution board, and a third analog quantity input board.

8. A once-through steam generator pressure control method, **characterized by** comprising the following steps executed by the once-through steam generator pressure control system according to any one of claims 1-7:
S1, measuring an outlet pressure value of the once-through steam generator (10), determining whether the outlet pressure value is greater than a target pressure setting value, and if yes, outputting a pressure deviation signal;
S2, measuring an outlet flow value of the once-through steam generator (10) and an inlet flow value of the water supply regulating valve group (50), calculating a difference value between the outlet flow value and the inlet flow value, superposing the difference value and the pressure deviation signal, and outputting a fine adjustment control signal;
S3, measuring a steam inlet pressure value of the steam turbine (20), determining whether the steam inlet pressure value exceeds a switching threshold, if yes, outputting a high-low load signal, and opening both the first valve (51) and the second valve (52); and if not, closing the first valve (51), and opening the second valve (52).

9. The once-through steam generator pressure control method according to claim 8, **characterized in that** the high-low load signal further comprises coarse adjustment opening data, and the method further comprises the step of setting a first valve opening for the first valve (51) according to the coarse adjustment opening data.

10. The once-through steam generator pressure control method according to claim 8, **characterized in that** the fine adjustment control signal comprises fine adjustment opening data, and the method further comprises the step of setting a second valve opening for the second valve (52) according to the fine adjustment opening data in the fine adjustment control signal.

11. A steam generator pressure control system, comprising a once-through steam generator (10), a steam turbine (20) and a water supply regulating valve group (50), the system further comprising
a first control module (61) configured to measure an outlet pressure value of the steam generator (10), and compare the outlet pressure value with a preset target pressure value to obtain a pressure deviation value;
a second control module (62) configured to measure an outlet flow value of the steam generator (10) and an inlet flow value of the water supply regulating valve group (50), calculate a flow difference value between the outlet flow value and the inlet flow value, and then superpose the flow difference value and the pressure deviation value to obtain a first opening degree value for controlling a first valve (51) of the water supply regulating valve group (50); **characterized in that** it further comprises
a third control module (63) configured to measure a steam inlet pressure value of the steam turbine (20) and compare the steam inlet pressure value with a preset reference threshold to obtain a second opening degree value for controlling a second valve (52) of the water supply regulating valve group (50).

12. The steam generator pressure control system according to claim 11, **characterized in that** the first control module (61) comprises a first control channel (31) and a first control unit (41), the first control channel (31) is configured to measure the outlet pressure value of the steam generator (10), and the first control unit (41) is configured to compare the outlet pressure value with the preset target pressure value to obtain the pressure deviation value.

13. The steam generator pressure control system according to claim 11, **characterized in that** the second control module (62) comprises a second control channel (32) and a second control unit (42), the second control channel (32) is configured to measure the outlet flow value of the steam generator (10) and the inlet flow value of the water supply regulating valve group (50), the second control unit (42) is configured to calculate the flow difference value between the outlet flow value and the inlet flow value, and then superposing the flow difference value and the pressure deviation value.

14. The steam generator pressure control system according to claim 13, **characterized in that** the second control channel (32) comprises a first deviation control channel (321) and a second deviation control channel (322), the first deviation control channel (321) is configured to measure the outlet flow value of the steam generator (10), and the second deviation control channel (322) is configured to measure the inlet flow value of the water supply regulating valve group (50).

15. The steam generator pressure control system according to claim 11, **characterized in that** the third control module (63) comprises a third control channel (33) and a third control unit (43), the third control channel (33) is configured to measure the steam inlet pressure value of the steam turbine (20), and the third control unit (43) is configured to compare the steam inlet pressure value with the preset reference threshold to obtain the second opening degree value for controlling the second valve (52) of the water supply regulating valve group (50).

16. A steam generator pressure control method, comprising the following steps executed by the steam generator pressure control system according to any one of claims 11-15:
S1, measuring an outlet pressure value of the steam generator (10), and comparing the outlet pressure value with a preset target pressure value to obtain a pressure deviation value;
S2, measuring an outlet flow value of the steam generator (10) and an inlet flow value of the water supply regulating valve group (50), calculating a flow difference value between the outlet flow value and the inlet flow value, and then superposing the flow difference value and the pressure deviation value to obtain a first opening degree value for controlling a first valve (51) of the water supply regulating valve group (50); and
S3, measuring a steam inlet pressure value of the steam turbine (20), and comparing the steam inlet pressure value with a preset reference threshold to obtain a second opening degree value for controlling a second valve (52) of the water supply regulating valve group (50).

17. A nuclear power plant steam generator system, **characterized by** comprising a steam generator (10), a steam turbine (20), a water supply regulating valve group (50), and the steam generator pressure control system (100) according to any one of claims 11-15.

## Patentansprüche

1. Durchlauf-Dampferzeugerdrucksteuerungssystem, umfassend einen Durchlaufdampferzeuger (10), eine Dampfturbine (20) und eine Wasserzufuhr-Regelventilgruppe (50); wobei das System ferner Folgendes umfasst:
einen Druckabweichung-Steuerkanal (31), der dazu konfiguriert ist, einen Auslassdruckwert des Durchlaufdampferzeugers (10) zu messen;
eine erste Steuereinheit (41), die dazu konfiguriert ist, den Auslassdruckwert mit einem Solldruckeinstellwert zu vergleichen und selektiv ein Druckabweichungssignal auszugeben;
einen Dampf-Wasser-Strömungsabweichung-Steuerkanal (32), der dazu konfiguriert ist, einen Auslass-Strömungswert des Durchlaufdampferzeugers (10) und einen Einlass-Strömungswert der Wasserzufuhr-Regelventilgruppe (50) zu messen;
eine zweite Steuereinheit (42), die dazu konfiguriert ist, einen Differenzwert zwischen dem Auslass-Strömungswert und dem Einlass-Strömungswert zu berechnen, den Differenzwert und das Druckabweichungssignal zu überlagern und ein Feinanpassung-Steuersignal auszugeben;
**dadurch gekennzeichnet, dass** es ferner Folgendes umfasst:
einen Lastbedarf-Steuerkanal (33), der dazu konfiguriert ist, einen Dampf-Einlassdruckwert der Dampfturbine (20) zu messen;
eine dritte Steuereinheit (43), die dazu konfiguriert ist, den Dampf-Einlassdruckwert mit einem Schaltschwellenwert zu vergleichen und selektiv ein Hoch-Niedrig-Lastsignal auszugeben;
wobei die Wasserzufuhr-Regelventilgruppe (50) ein erstes Ventil (51) und ein zweites Ventil (52) umfasst, das erste Ventil (51) als Reaktion auf das Hoch-Niedrig-Lastsignal selektiv geöffnet oder geschlossen wird und das zweite Ventil (52) als Reaktion auf das Hoch-Niedrig-Lastsignal selektiv geöffnet oder geschlossen wird.

2. Durchlauf-Dampferzeugerdrucksteuerungssystem nach Anspruch 1, **dadurch gekennzeichnet, dass** das Hoch-Niedrig-Lastsignal Grobanpassung-Öffnungsdaten umfasst und eine erste Ventilöffnung für das erste Ventil (51) gemäß den Grobanpassung-Öffnungsdaten weiter eingestellt wird.

3. Durchlauf-Dampferzeugerdrucksteuerungssystem nach Anspruch 1, **dadurch gekennzeichnet, dass** das Feinanpassung-Steuersignal Feinanpassung-Öffnungsdaten umfasst und eine zweite Ventilöffnung für das zweite Ventil (52) gemäß den Feinanpassung-Öffnungsdaten in dem Feinanpassung-Steuersignal weiter eingestellt wird.

4. Durchlauf-Dampferzeugerdrucksteuerungssystem nach Anspruch 1, **dadurch gekennzeichnet, dass** das System ferner eine Drucksteuerungsvorrichtung (40) umfasst und die Drucksteuerungsvorrichtung (40) die erste Steuereinheit (41), die zweite Steuereinheit (42) und die dritte Steuereinheit (43) umfasst.

5. Durchlauf-Dampferzeugerdrucksteuerungssystem nach Anspruch 1, **dadurch gekennzeichnet, dass** der Dampf-Wasser-Strömungsabweichung-Steuerkanal (32) einen ersten Dampf-Wasser-Strömungsabweichung-Steuerkanal (321) und einen zweiten Dampf-Wasser-Strömungsabweichung-Steuerkanal (322) umfasst, der erste Dampf-Wasser-Strömungsabweichung-Steuerkanal (321) dazu konfiguriert ist, den Auslass-Strömungswert des Durchlaufdampferzeugers (10) zu messen, und der zweite Dampf-Wasser-Strömungsabweichung-Steuerkanal (322) dazu konfiguriert ist, den Einlass-Strömungswert der Wasserzufuhr-Regelventilgruppe (50) zu messen; wobei der erste Dampf-Wasser-Strömungsabweichung-Steuerkanal (321) einen zweiten Druckgeber, eine zweite analoge Mengenkonditionierungsverteilertafel und eine zweite analoge Mengeneingabetafel umfasst.

6. Durchlauf-Dampferzeugerdrucksteuerungssystem nach einem der Ansprüche 1-5, **dadurch gekennzeichnet, dass** der Druckabweichung-Steuerkanal (31) einen ersten Druckgeber, eine erste analoge Mengenkonditionierungsverteilertafel und eine erste analoge Mengeneingabetafel umfasst.

7. Durchlauf-Dampferzeugerdrucksteuerungssystem nach einem der Ansprüche 1-5, **dadurch gekennzeichnet, dass** der Lastbedarf-Steuerkanal (33) einen dritten Druckgeber, eine dritte analoge Mengenkonditionierungsverteilertafel und eine dritte analoge Mengeneingabetafel umfasst.

8. Durchlauf-Dampferzeugerdrucksteuerungsverfahren, **dadurch gekennzeichnet, dass** es die folgenden Schritte umfasst, die durch das Durchlauf-Dampferzeugerdrucksteuerungssystem nach einem der Ansprüche 1-7 ausgeführt werden:
S1, Messen eines Auslassdruckwertes des Durchlaufdampferzeugers (10), Bestimmen, ob der Auslassdruckwert größer als ein Solldruckeinstellwert ist, und falls ja, Ausgeben eines Druckabweichungssignals;
S2, Messen eines Auslass-Strömungswerts des Durchlaufdampferzeugers (10) und eines Einlass-Strömungswerts der Wasserzufuhr-Regelventilgruppe (50), Berechnen eines Differenzwerts zwischen dem Auslass-Strömungswert und dem Einlass-Strömungswert, Überlagern des Differenzwerts und des Druckabweichungssignals und Ausgeben eines Feinanpassung-Steuersignals;
S3, Messen eines Dampf-Einlassdruckwerts der Dampfturbine (20), Bestimmen, ob der Dampf-Einlassdruckwert einen Schaltschwellenwert überschreitet, falls ja, Ausgeben eines Hoch-Niedrig-Lastsignals und Öffnen sowohl des ersten Ventils (51) als auch des zweiten Ventils (52); und falls nicht, Schließen des ersten Ventils (51) und Öffnen des zweiten Ventils (52).

9. Durchlauf-Dampferzeugerdrucksteuerungsverfahren nach Anspruch 8, **dadurch gekennzeichnet, dass** das Hoch-Niedrig-Lastsignal ferner Grobanpassung-Öffnungsdaten umfasst und das Verfahren ferner den Schritt des Einstellens einer ersten Ventilöffnung für das erste Ventil (51) gemäß den Grobanpassung-Öffnungsdaten umfasst.

10. Durchlauf-Dampferzeugerdrucksteuerungsverfahren nach Anspruch 8, **dadurch gekennzeichnet, dass** das Feinanpassung-Steuersignal Feinanpassung-Öffnungsdaten umfasst und das Verfahren ferner den Schritt des Einstellens einer zweiten Ventilöffnung für das zweite Ventil (52) gemäß den Feinanpassung-Öffnungsdaten in dem Feinanpassung-Steuersignal umfasst.

11. Dampferzeugerdrucksteuerungssystem, umfassend einen Durchlaufdampferzeuger (10), eine Dampfturbine (20) und eine Wasserzufuhr-Regelventilgruppe (50); wobei das System ferner Folgendes umfasst:
ein erstes Steuermodul (61), das dazu konfiguriert ist, einen Auslassdruckwert des Dampferzeugers (10) zu messen und den Auslassdruckwert mit einem voreingestellten Solldruckwert zu vergleichen, um einen Druckabweichungswert zu erlangen;
ein zweites Steuermodul (62), das dazu konfiguriert ist, einen Auslass-Strömungswert des Dampferzeugers (10) und einen Einlass-Strömungswert der Wasserzufuhr-Regelventilgruppe (50) zu messen, einen Strömungsdifferenzwert zwischen dem Auslass-Strömungswert und dem Einlass-Strömungswert zu berechnen und dann den Strömungsdifferenzwert und den Druckabweichungswert zu überlagern, um einen ersten Öffnungsgradwert zum Steuern eines ersten Ventils (51) der Wasserzufuhr-Regelventilgruppe (50) zu erlangen; **dadurch gekennzeichnet, dass** es ferner Folgendes umfasst:
ein drittes Steuermodul (63), das dazu konfiguriert ist, einen Dampf-Einlassdruckwert der Dampfturbine (20) zu messen und den Dampf-Einlassdruckwert mit einem voreingestellten Referenzschwellenwert zu vergleichen, um einen zweiten Öffnungsgradwert zum Steuern eines zweiten Ventils (52) der Wasserzufuhr-Regelventilgruppe (50) zu erlangen.

12. Dampferzeugerdrucksteuerungssystem nach Anspruch 11, **dadurch gekennzeichnet, dass** das erste Steuermodul (61) einen ersten Steuerkanal (31) und eine erste Steuereinheit (41) umfasst, der erste Steuerkanal (31) dazu konfiguriert ist, den Auslassdruckwert des Dampferzeugers (10) zu messen, und die erste Steuereinheit (41) dazu konfiguriert ist, den Auslassdruckwert mit dem voreingestellten Solldruckwert zu vergleichen, um den Druckabweichungswert zu erlangen.

13. Dampferzeugerdrucksteuerungssystem nach Anspruch 11, **dadurch gekennzeichnet, dass** das zweite Steuermodul (62) einen zweiten Steuerkanal (32) und eine zweite Steuereinheit (42) umfasst, der zweite Steuerkanal (32) dazu konfiguriert ist, den Auslass-Strömungswert des Dampferzeugers (10) und den Einlass-Strömungswert der Wasserzufuhr-Regelventilgruppe (50) zu messen, die zweite Steuereinheit (42) dazu konfiguriert ist, den Strömungsdifferenzwert zwischen dem Auslass-Strömungswert und dem Einlass-Strömungswert zu berechnen und dann den Strömungsdifferenzwert und den Druckabweichungswert zu überlagern.

14. Dampferzeugerdrucksteuerungssystem nach Anspruch 13, **dadurch gekennzeichnet, dass** der zweite Steuerkanal (32) einen ersten Abweichungssteuerkanal (321) und einen zweiten Abweichungssteuerkanal (322) umfasst, der erste Abweichungssteuerkanal (321) dazu konfiguriert ist, den Auslass-Strömungswert des Dampferzeugers (10) zu messen, und der zweite Abweichungssteuerkanal (322) dazu konfiguriert ist, den Einlass-Strömungswert der Wasserzufuhr-Regelventilgruppe (50) zu messen.

15. Dampferzeugerdrucksteuerungssystem nach Anspruch 11, **dadurch gekennzeichnet, dass** das dritte Steuermodul (63) einen dritten Steuerkanal (33) und eine dritte Steuereinheit (43) umfasst, der dritte Steuerkanal (33) dazu konfiguriert ist, den Dampf-Einlassdruckwert der Dampfturbine (20) zu messen, und die dritte Steuereinheit (43) dazu konfiguriert ist, den Dampf-Einlassdruckwert mit dem voreingestellten Referenzschwellenwert zu vergleichen, um den zweiten Öffnungsgradwert zum Steuern des zweiten Ventils (52) der Wasserzufuhr-Regelventilgruppe (50) zu erlangen.

16. Dampferzeugerdrucksteuerungsverfahren, umfassend die folgenden Schritte, die durch das Dampferzeugerdrucksteuerungssystem nach einem der Ansprüche 11-15 ausgeführt werden:
S1, Messen eines Auslassdruckwertes des Dampferzeugers (10) und Vergleichen des Auslassdruckwertes mit einem voreingestellten Solldruckwert, um einen Druckabweichungswert zu erlangen;
S2, Messen eines Auslass-Strömungswerts des Dampferzeugers (10) und eines Einlass-Strömungswerts der Wasserzufuhr-Regelventilgruppe (50), Berechnen eines Strömungsdifferenzwerts zwischen dem Auslass-Strömungswert und dem Einlass-Strömungswert und dann Überlagern des Strömungsdifferenzwerts und des Druckabweichungswerts, um einen ersten Öffnungsgradwert zum Steuern eines ersten Ventils (51) der Wasserzufuhr-Regelventilgruppe (50) zu erlangen; und
S3, Messen eines Dampf-Einlassdruckwerts der Dampfturbine (20) und Vergleichen des Dampf-Einlassdruckwerts mit einem voreingestellten Referenzschwellenwert, um einen zweiten Öffnungsgradwert zum Steuern eines zweiten Ventils (52) der Wasserzufuhr-Regelventilgruppe (50) zu erlangen.

17. Kernkraftwerk-Dampferzeugersystem, **dadurch gekennzeichnet, dass** es einen Dampferzeuger (10), eine Dampfturbine (20), eine Wasserzufuhr-Regelventilgruppe (50) und das Dampferzeugerdrucksteuerungssystem (100) nach einem der Ansprüche 11-15 umfasst.

## Revendications

1. Système de commande de pression de générateur de vapeur à passage unique, comprenant un générateur de vapeur à passage unique (10), une turbine à vapeur (20) et un groupe de soupapes de régulation d'alimentation en eau (50) ; le système comprenant également
un canal de commande d'écart de pression (31) configuré pour mesurer une valeur de pression de sortie du générateur de vapeur à passage unique (10) ;
une première unité de commande (41) configurée pour comparer la valeur de pression de sortie avec une valeur de réglage de pression cible et émettre sélectivement un signal d'écart de pression ;
un canal de commande de déviation d'écoulement vapeur-eau (32) configuré pour mesurer une valeur d'écoulement de sortie du générateur de vapeur à passage unique (10) et une valeur d'écoulement d'entrée du groupe de soupapes de régulation d'alimentation en eau (50) ;
une deuxième unité de commande (42) configurée pour calculer une valeur de différence entre la valeur d'écoulement de sortie et la valeur d'écoulement d'entrée, superposer la valeur de différence et le signal d'écart de pression, et émettre un signal de commande de réglage fin ;
**caractérisé en ce qu'**il comprend également
un canal de commande de demande de charge (33) configuré pour mesurer une valeur de pression d'entrée de vapeur de la turbine à vapeur (20) ;
une troisième unité de commande (43) configurée pour comparer la valeur de pression d'entrée de vapeur avec une valeur de seuil de commutation et émettre sélectivement un signal de charge haute-basse ;
dans lequel le groupe de soupapes de régulation d'alimentation en eau (50) comprend une première soupape (51) et une seconde soupape (52), la première soupape (51) est sélectivement ouverte ou fermée en réponse au signal de charge haute-basse, et la seconde soupape (52) est sélectivement ouverte ou fermée en réponse au signal de charge haute-basse.

2. Système de commande de pression de générateur de vapeur à passage unique selon la revendication 1, **caractérisé en ce que** le signal de charge haute-basse comprend des données d'ouverture de réglage grossier, et une première ouverture de soupape est également réglée pour la première soupape (51) en fonction des données d'ouverture de réglage grossier.

3. Système de commande de pression de générateur de vapeur à passage unique selon la revendication 1, **caractérisé en ce que** le signal de commande de réglage fin comprend des données d'ouverture de réglage fin, et une seconde ouverture de soupape est également réglée pour la seconde soupape (52) en fonction des données d'ouverture de réglage fin dans le signal de commande de réglage fin.

4. Système de commande de pression de générateur de vapeur à passage unique selon la revendication 1, **caractérisé en ce que** le système comprend également un dispositif de commande de pression (40), et le dispositif de commande de pression (40) comprend la première unité de commande (41), la deuxième unité de commande (42) et la troisième unité de commande (43).

5. Système de commande de pression de générateur de vapeur à passage unique selon la revendication 1, **caractérisé en ce que** le canal de commande de déviation d'écoulement vapeur-eau (32) comprend un premier canal de commande de déviation d'écoulement vapeur-eau (321) et un deuxième canal de commande de déviation d'écoulement vapeur-eau (322), le premier canal de commande de déviation d'écoulement vapeur-eau (321) est configuré pour mesurer la valeur d'écoulement de sortie du générateur de vapeur à passage unique (10), et le deuxième canal de commande de déviation d'écoulement vapeur-eau (322) est configuré pour mesurer la valeur d'écoulement d'entrée du groupe de soupapes de régulation d'alimentation en eau (50) ; le premier canal de commande de déviation d'écoulement vapeur-eau (321) comprend un second émetteur de pression, une seconde carte de distribution de conditionnement de quantité analogique et une deuxième carte d'entrée de quantité analogique.

6. Système de commande de pression de générateur de vapeur à passage unique selon l'une quelconque des revendications 1 à 5, **caractérisé en ce que** le canal de commande d'écart de pression (31) comprend un premier émetteur de pression, une première carte de distribution de conditionnement de quantité analogique et une première carte d'entrée de quantité analogique.

7. Système de commande de pression de générateur de vapeur à passage unique selon l'une quelconque des revendications 1 à 5, **caractérisé en ce que** le canal de commande de demande de charge (33) comprend un troisième émetteur de pression, une troisième carte de distribution de conditionnement de quantité analogique et une troisième carte d'entrée de quantité analogique.

8. Procédé de commande de pression de générateur de vapeur à passage unique, **caractérisé en ce qu'**il comprend les étapes suivantes exécutées par le système de commande de pression de générateur de vapeur à passage unique selon l'une quelconque des revendications 1 à 7 :
S1, la mesure d'une valeur de pression de sortie du générateur de vapeur à passage unique (10), le fait de déterminer si la valeur de pression de sortie est supérieure à une valeur de réglage de pression cible et, si oui, l'émission d'un signal d'écart de pression ;
S2, la mesure d'une valeur d'écoulement de sortie du générateur de vapeur à passage unique (10) et d'une valeur d'écoulement d'entrée du groupe de soupapes de régulation d'alimentation en eau (50), le calcul d'une valeur de différence entre la valeur d'écoulement de sortie et la valeur d'écoulement d'entrée, la superposition de la valeur de différence et du signal d'écart de pression, et l'émission d'un signal de commande de réglage fin ;
S3, la mesure d'une valeur de pression d'entrée de vapeur de la turbine à vapeur (20), le fait de déterminer si la valeur de pression d'entrée de vapeur dépasse un seuil de commutation, si oui, l'émission d'un signal de charge haute-basse, et l'ouverture, à la fois, de la première soupape (51) et de la seconde soupape (52) ; et si non, la fermeture de la première soupape (51) et l'ouverture de la seconde soupape (52).

9. Procédé de commande de pression de générateur de vapeur à passage unique selon la revendication 8, **caractérisé en ce que** le signal de charge haute-basse comprend également des données d'ouverture de réglage grossier, et le procédé comprend en outre l'étape de réglage d'une première ouverture de soupape pour la première soupape (51) en fonction des données d'ouverture de réglage grossier.

10. Procédé de commande de pression de générateur de vapeur à passage unique selon la revendication 8, **caractérisé en ce que** le signal de commande de réglage fin comprend des données d'ouverture de réglage fin, et le procédé comprend également l'étape de réglage d'une seconde ouverture de soupape pour la seconde soupape (52) en fonction des données d'ouverture de réglage fin dans le signal de commande de réglage fin.

11. Système de commande de pression de générateur de vapeur, comprenant un générateur de vapeur à passage unique (10), une turbine à vapeur (20) et un groupe de soupapes de régulation d'alimentation en eau (50) ; le système comprenant également
un premier module de commande (61) configuré pour mesurer une valeur de pression de sortie du générateur de vapeur (10), et comparer la valeur de pression de sortie avec une valeur de pression cible prédéfinie pour obtenir une valeur d'écart de pression ;
un deuxième module de commande (62) configuré pour mesurer une valeur d'écoulement de sortie du générateur de vapeur (10) et une valeur d'écoulement d'entrée du groupe de soupapes de régulation d'alimentation en eau (50), calculer une valeur de différence d'écoulement entre la valeur d'écoulement de sortie et la valeur d'écoulement d'entrée, puis superposer la valeur de différence d'écoulement et la valeur d'écart de pression pour obtenir une première valeur de degré d'ouverture pour commander une première soupape (51) du groupe de soupapes de régulation d'alimentation en eau (50) ; **caractérisé en ce qu'**il comprend également
un troisième module de commande (63) configuré pour mesurer une valeur de pression d'entrée de vapeur de la turbine à vapeur (20) et comparer la valeur de pression d'entrée de vapeur avec un seuil de référence prédéfini pour obtenir une seconde valeur de degré d'ouverture pour commander une seconde soupape (52) du groupe de soupapes de régulation d'alimentation en eau (50).

12. Système de commande de pression de générateur de vapeur selon la revendication 11, **caractérisé en ce que** le premier module de commande (61) comprend un premier canal de commande (31) et une première unité de commande (41), le premier canal de commande (31) est configuré pour mesurer la valeur de pression de sortie du générateur de vapeur (10), et la première unité de commande (41) est configurée pour comparer la valeur de pression de sortie avec la valeur de pression cible prédéfinie pour obtenir la valeur d'écart de pression.

13. Système de commande de pression de générateur de vapeur selon la revendication 11, **caractérisé en ce que** le deuxième module de commande (62) comprend un deuxième canal de commande (32) et une deuxième unité de commande (42), le deuxième canal de commande (32) est configuré pour mesurer la valeur d'écoulement de sortie du générateur de vapeur (10) et la valeur d'écoulement d'entrée du groupe de soupapes de régulation d'alimentation en eau (50), la deuxième unité de commande (42) est configurée pour calculer la valeur de différence d'écoulement entre la valeur d'écoulement de sortie et la valeur d'écoulement d'entrée, puis pour superposer la valeur de différence d'écoulement et la valeur d'écart de pression.

14. Système de commande de pression de générateur de vapeur selon la revendication 13, **caractérisé en ce que** le deuxième canal de commande (32) comprend un premier canal de commande d'écart (321) et un deuxième canal de commande d'écart (322), le premier canal de commande d'écart (321) est configuré pour mesurer la valeur d'écoulement de sortie du générateur de vapeur (10), et le deuxième canal de commande d'écart (322) est configuré pour mesurer la valeur d'écoulement d'entrée du groupe de soupapes de régulation d'alimentation en eau (50).

15. Système de commande de pression de générateur de vapeur selon la revendication 11, **caractérisé en ce que** le troisième module de commande (63) comprend un troisième canal de commande (33) et une troisième unité de commande (43), le troisième canal de commande (33) est configuré pour mesurer la valeur de pression d'entrée de vapeur de la turbine à vapeur (20), et la troisième unité de commande (43) est configurée pour comparer la valeur de pression d'entrée de vapeur avec le seuil de référence prédéfini pour obtenir la deuxième valeur de degré d'ouverture pour commander la deuxième soupape (52) du groupe de soupapes de régulation d'alimentation en eau (50).

16. Procédé de commande de pression de générateur de vapeur, comprenant les étapes suivantes exécutées par le système de commande de pression de générateur de vapeur selon l'une quelconque des revendications 11 à 15 :
S1, la mesure d'une valeur de pression de sortie du générateur de vapeur (10), et la comparaison de la valeur de pression de sortie avec une valeur de pression cible prédéfinie pour obtenir une valeur d'écart de pression ;
S2, la mesure d'une valeur d'écoulement de sortie du générateur de vapeur (10) et d'une valeur d'écoulement d'entrée du groupe de soupapes de régulation d'alimentation en eau (50), le calcul d'une valeur de différence d'écoulement entre la valeur d'écoulement de sortie et la valeur d'écoulement d'entrée, et puis la superposition de la valeur de différence d'écoulement et de la valeur d'écart de pression pour obtenir une première valeur de degré d'ouverture pour commander une première soupape (51) du groupe de soupapes de régulation d'alimentation en eau (50) ; et
S3, la mesure d'une valeur de pression d'entrée de vapeur de la turbine à vapeur (20), et la comparaison de la valeur de pression d'entrée de vapeur avec un seuil de référence prédéfini pour obtenir une seconde valeur de degré d'ouverture pour commander une seconde soupape (52) du groupe de soupapes de régulation d'alimentation en eau (50).

17. Système de générateur de vapeur de centrale nucléaire, **caractérisé en ce qu'**il comprend un générateur de vapeur (10), une turbine à vapeur (20), un groupe de soupapes de régulation d'alimentation en eau (50) et le système de commande de pression du générateur de vapeur (100) selon l'une quelconque des revendications 11 à 15.
